Europäisches Patentamt

European Patent Office

Office européen des brevets

(19)

(11) Publication number: **0 160 460 B1**

(12) **EUROPEAN PATENT SPECIFICATION**

(45) Date of publication of patent specification: **17.07.91**

(51) Int. Cl.⁵: **F02C 6/12**, F02B 37/12, F01D 17/14

(21) Application number: **85302740.7**

(22) Date of filing: **18.04.85**

(54) Turbocharger.

(30) Priority: **20.04.84 US 602644**

(43) Date of publication of application:
**06.11.85 Bulletin 85/45**

(45) Publication of the grant of the patent:
**17.07.91 Bulletin 91/29**

(84) Designated Contracting States:
**AT BE DE FR GB IT NL SE**

(56) References cited:
**EP-A- 0 024 275**     **GB-A- 775 454**
**GB-A- 861 630**      **US-A- 2 428 830**
**US-A- 2 976 013**     **US-A- 3 033 519**
**US-A- 3 112 096**     **US-A- 4 242 040**

(73) Proprietor: **Allied-Signal Inc.**
**9851-9951 Sepulveda Boulevard P.O. Box 92248**
**Los Angeles California 90009(US)**

(72) Inventor: **Burdette, Fred E.**
**4017 West 232nd Street**
**Torrance California 90505(US)**
Inventor: **Fleury, Jean-Luc**
**1457 21st Street**
**Manhattan Beach California 90266(US)**
Inventor: **Roessler, Manfred**
**1817 No. Meadows Avenue**
**Manhattan Beach California 90266(US)**

(74) Representative: **Arthur, George Fitzgerald et al**
**KILBURN & STRODE 30, John Street**
**London WC1N 2DD(GB)**

Rank Xerox (UK) Business Services

## Description

This invention relates to turbochargers, that is to say, arrangements in which a turbine is driven by exhaust gas from an engine and drives a compressor for providing charge air to the engine. The efficiency or operational range of the turbocharger can be improved by controlling the flow of exhaust gas to the turbine and it has been proposed in US Patent No 3,112,096 to provide vanes in the exhaust gas passage which are pivotally mounted so that the geometry of the passage can be varied to control the flow of gas to the turbine.

GB Patent No 775454 shows a turbocharger having a turbine housing forming a passage for directing exhaust gas from an engine through an annular passage to the turbine, and a nozzle ring, a plurality of vanes in the annular passage and pivotally mounted on the nozzle ring, with means to pivot the vanes.

The problem with the known systems is to provide an adequate seal between the free ends of the vanes and the wall of the passage to avoid leakage of exhaust gas while yet permitting expansion of some of the components at high operating temperatures, but without allowing the vanes to bind in the exhaust passage.

According to the present invention, there is provided a turbocharger having a fixed casing including a turbine housing for directing exhaust gas from an engine, through an annular passage of the housing to the turbine rotor, a nozzle ring, coaxial with the rotor and having a face defining one of the two opposed walls of the passage, a plurality of nozzle vanes in the annular passage and pivotally mounted on the nozzle ring, whereby pivoting of the vanes varies the effective area of the annular passage and/or the angle at which exhaust gas is directed to the turbine, and actuating means to pivot the vanes, the actuating means including a vane arm coupled to each nozzle vane and carried by the nozzle ring, and a unison ring mounted to be rotatable in relation to the nozzle ring to pivot all the vanes in unison by engagement with the vane arms, the unison ring being of annular form and arranged to be rotatable in relation to an annular recess in a housing member guided by rollers, characterised in that the nozzle ring is resiliently supported in the housing to allow it to float axially, and in that the rollers roll on an inner wall or an outer wall of the recess according to the degree of radial expansion of the unison ring.

The nozzle ring may be spring biased so that the ends of the vanes are always urged against a wall of the housing defining the annular passage to effect a seal at the ends of the vanes. The nozzle ring is capable of axial movement under the spring bias, but that movement may be limited by spacers or the like so that the condition cannot arise in which the vanes bind between the opposed walls of the turbine housing and the nozzle ring which define the annular exhaust gas passage.

The nozzle ring may be mounted to have clearance with the rest of the turbine housing and also there may be stops preventing rotation of the nozzle ring in the housing.

The pivotal adjustment of the vanes is by a unison ring which can be turned in relation to the nozzle ring and which has individual cranks or the equivalent extending to each of the vanes so that as the unison ring is turned all the vanes turn together in the nozzle ring.

The unison ring is mounted to turn in an annular recess in a part of the turbine housing and that can conveniently be on a ring of rollers which can roll around inner or outer circumferential walls of the recess depending on the operating temperature.

Conveniently the nozzle ring is carried by a tubular member which can be located in relation to the housing, but which has a circumferential surface which is a fit in a corresponding surface on the nozzle ring so that the nozzle ring can slide axially in relation to the tubular member. An annular spring washer can provide the spring bias on the nozzle ring acting at its inner periphery against the shoulder of the nozzle ring and at its outer periphery on a component secured to or located against the turbine housing.

The invention may be carried into practice in various ways and one embodiment will now be described by way of example with reference to the accompanying drawings, in which:-

Figure 1 is a diagrammatic view of a turbocharged engine system;

Figure 2 is a sectional elevation of certain internal components of an exhaust gas turbocharger;

Figure 3 is a sectional view of the turbine end of the turbocharger of Figure 2;

Figure 4 is a partial sectional view of the turbine end of the turbocharger on the line 4-4 of Figure 3;

Figure 5 is a partial sectional view of the turbine end of the turbocharger on the line 5-5 of Figure 3;

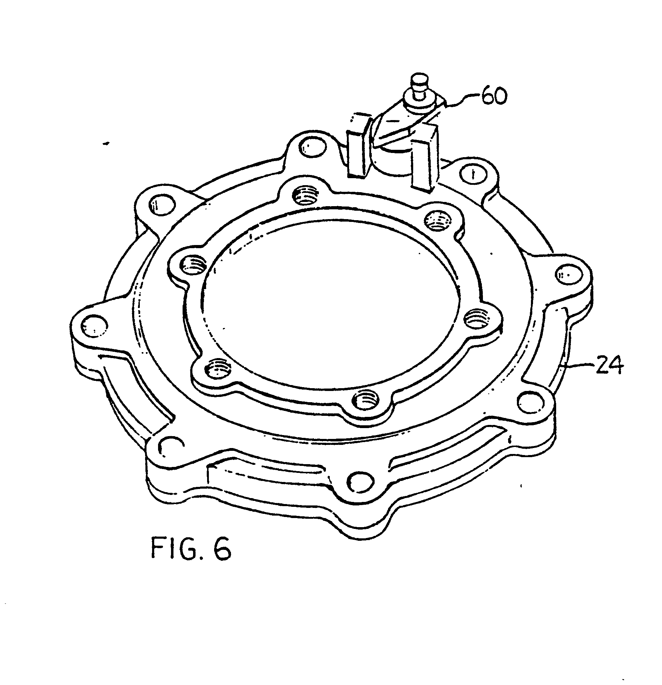

Figure 6 is a plan view of the flange member of the turbocharger of Figures 2 to 5;

Figure 7 is a plan view of the nozzle ring of the turbocharger detailing several alternative embodiments of the spacer pins; and

Figure 8 is a partial sectional view detailing an alternative type of spacer pin.

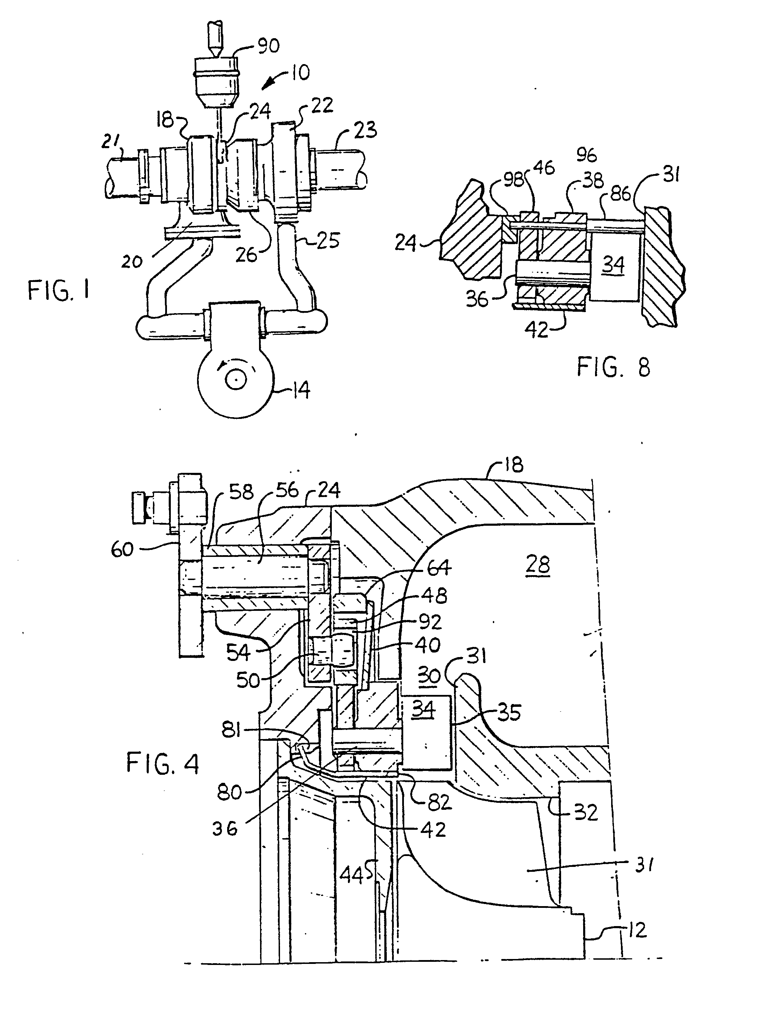

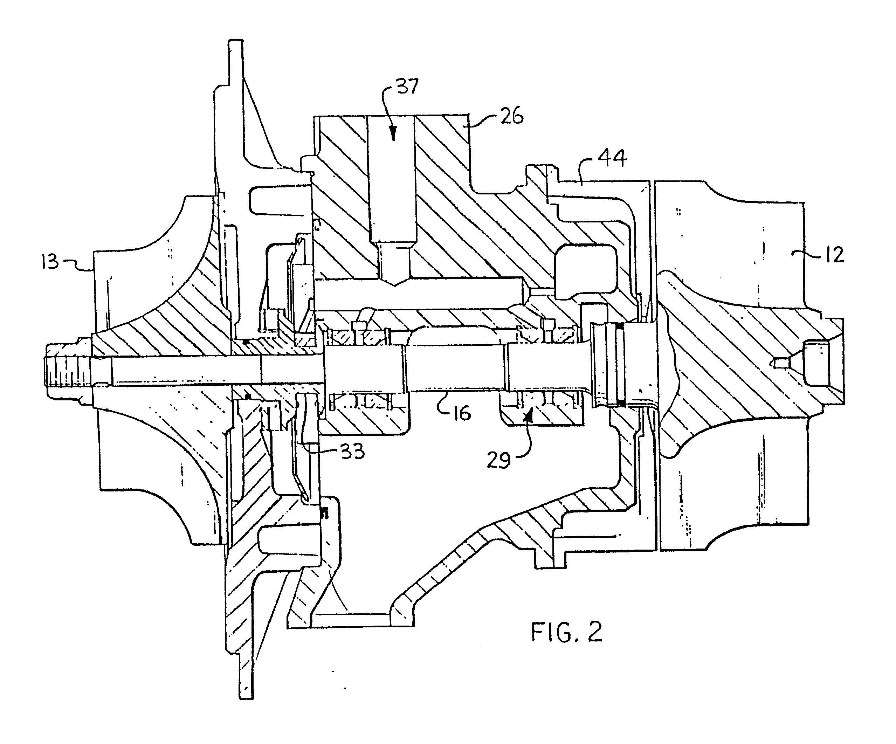

An engine system as shown in Figures 1-3 includes turbomachinery in the form of a turbocharger 10 generally comprising a turbine wheel 12 and a compressor impeller 13 mounted on opposite ends of a common shaft 16. The turbine wheel 12 is disposed within a turbine housing 18 which includes an inlet 20 for receiving exhaust gas from an engine 14 and an outlet 21 for discharging the exhaust gas. The turbine housing 18 guides the engine exhaust gas into communication with, and expansion through, the turbine wheel 12 for rotatably driving the turbine wheel. Such driving of the turbine wheel simultaneously rotatably drives the compressor impeller 13 which is carried within a compressor housing 22. The compressor housing 22, including an inlet 23, an outlet 25, and the compressor impeller 13 cooperate to draw in and compress ambient air for supply to the intake of the engine 14.

The turbine housing 18 is mounted to a flange member 24 which in turn is mounted on a centre housing 26. The compressor housing 22 is mounted on the other side of the centre housing 26, which includes a bearing 29 for rotatably receiving and supporting the shaft 16. A thrust bearing assembly 33 is carried about the shaft adjacent the compressor housing for preventing axial excursions of the shaft 16. A heat shield 44 is positioned about the shaft 16 at the turbine end in order to insulate the centre housing 26 from the harmful effects of the exhaust gas.

Lubricant such as filtered engine oil is supplied via a lubricant inlet port 37 in the centre housing 26 to the journal bearing means 29 and to the thrust bearing assembly 33. The port communicates with a network of internal supply passages which are formed in the centre housing 26 to direct the lubricant to the appropriate bearings. The lubricant circulated to the bearings is collected in a suitable sump or drain for passage to appropriate filtering, cooling, and recirculation equipment, all in a well-known manner.

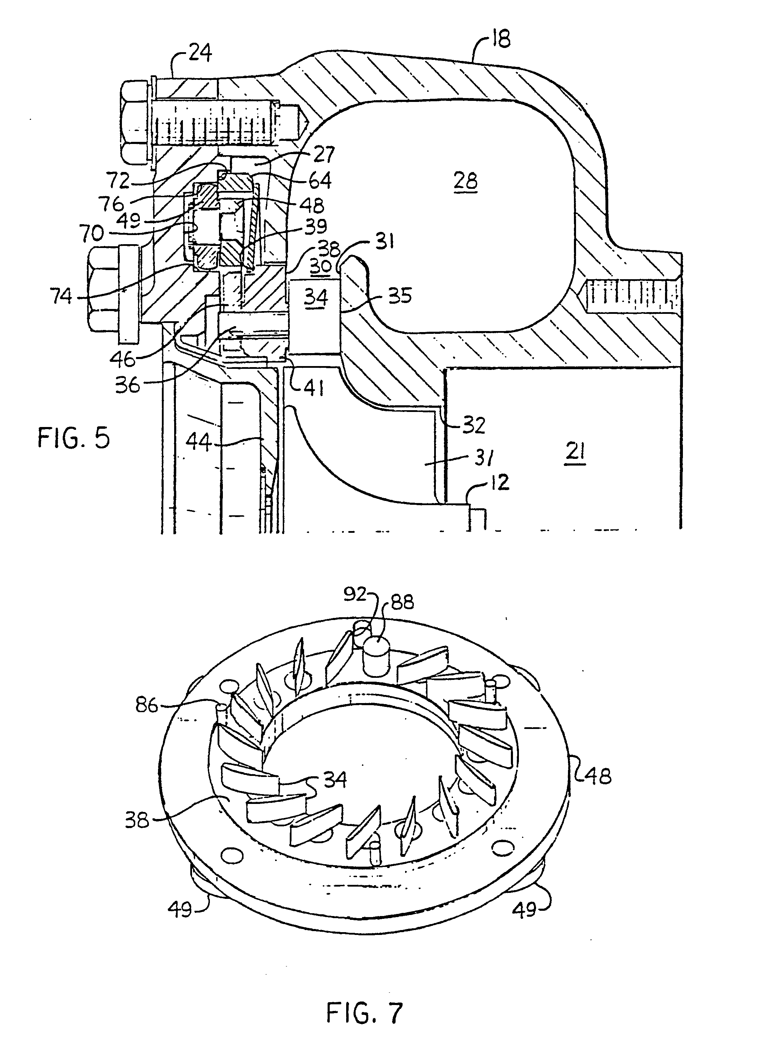

As shown in Figure 4 and 5, the turbine housing 18 forms a generally scroll-shaped volute 28 which accepts the exhaust gas from the engine 14 and directs it onto the turbine wheel blades 31 through an annular passage 30. Thereafter the exhaust gas flows axially through the turbine shroud 32 and exits the turbocharger through outlet 21 either into a suitable pollution-control device or the atmosphere. Placed within the annular passage 30 are a plurality of pivotable turbine-nozzle-defining vanes 34 which can be pivoted to vary the geometry of the annular passage 30 to control the angle at which the exhaust gas strikes the blades of the turbine wheel 12. This in turn controls the amount of energy imparted to the compressor wheel and ultimately the amount of air supplied to the engine.

The variable geometry turbine nozzle of the present invention is located within the flange and turbine housing end of turbocharger 10. The flange member 24 and the turbine housing 18 form a cavity 27 between the two in their assembled state which houses the mechanism for operating the variable geometry turbine nozzle as will be described below. The exhaust gas present within volute 28 flows through the annular passage 30 which is defined between the inner side wall 31 of the turbine housing 18 and an opposing wall of an annular nozzle ring 38.

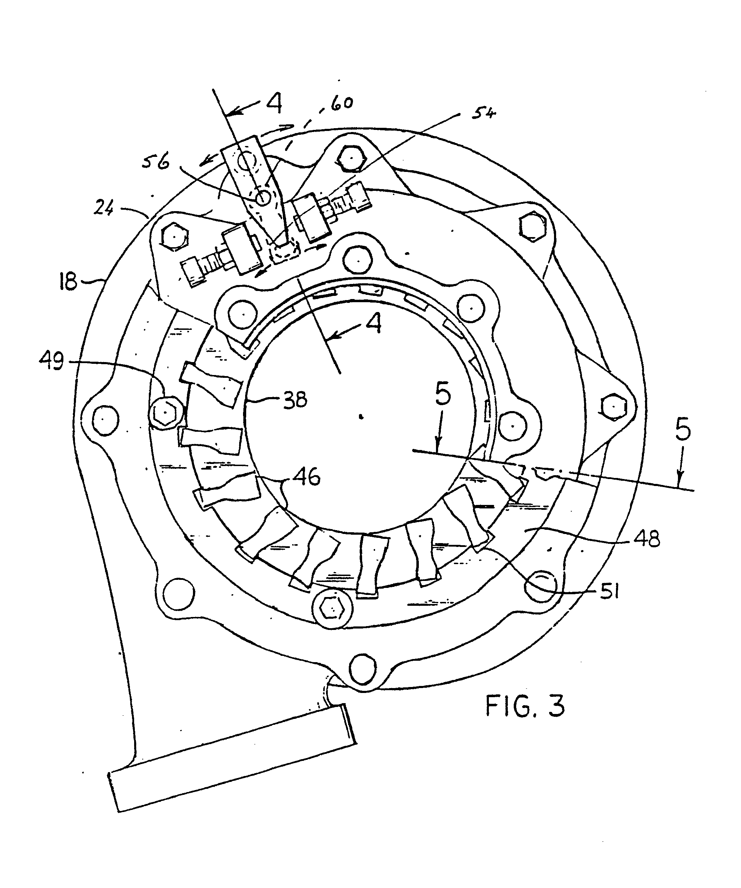

As shown in Figure 5, the nozzle ring 38 includes a shoulder portion 39 located on its outer radial surface, and a second shoulder portion 41 on its inner radial surface. Between the outer circumferential surface of the nozzle ring and the turbine housing is a radial clearance of approximately .025 to .05 cm. Located circumferentially around and within the annular passage 30 are a plurality of vanes 34 which are spring loaded axially of the turbine (as described in detail below) such that their ends 35 are urged flush against the side wall 31, as shown in Figure 5. Figure 4 shows a vane end in an unloaded position; the gap between the vane end 35 and inner wall 31 is caused by a nonessential spacer pin (not shown) as will be discussed below. The mounting of the vanes on the nozzle ring 38 is by a number of equally circumferentially spaced radial bores each accommodating a vane pin 36 associated with one of the vanes 34. A vane arm 46, the shape of which can be best seen in Figure 3, is attached to each vane pin 36 by a burn down process thereby attaching the vanes 34 to the nozzle ring 38 with the nozzle ring between the vane and vane arm, so that as the vane arm turns in the plane of Figure 3, the vane also turns.

An annular ring 48 has a plurality of slots 51 on its inner radial surface, each of which receives the outer end of a vane arm 46. Attached to one side of the unison ring 48 are at least three equally spaced rollers 49, which enable the unison ring 48 to turn easily in an annular recess 70 in the face of the flange member 24. Rotation of the unison ring, in the plane of Figure 3 rocks all the vane arms 46 and hence all the vanes. The shape of the vane arms 46 must be such as to maintain a basically rolling action within the slots 51 in the ring 48 to avoid binding within unison ring 48 as it rotates.

The recess 70 in the flange member 24 includes inner and outer tracks 74 and 76 respectively formed in the inner and outer surfaces of the recess such that the two tracks are aligned axially, spaced radially apart, and face one another. During start up or low load operation (i.e. periods of relatively low exhaust temperature), the rollers 49 of the unison ring 48 are in contact with the inner track 74. However, as the unison ring 48 expands with increased operating temperatures the expansion causes the rollers 49 to lose contact with inner track 74 and come into engagement with outer ring 76. This design feature reduces the likelihood of the unison ring 48 becoming free floating, misaligned, and possibly binding within the flange member, under cyclic operating conditions.

A shoulder 72 in the face of flange member 24 defines a counterbore for an annular spacer 64, which acts in cooperation with a bellville spring 40. The inboard side (that side facing the centre housing) of the radially outer edge of the spring 40 rests against, the spacer 64, and (when assembled) the outboard side of the radially inner edge of the spring acts against the shoulder portion 39 of the nozzle ring 38 such that it biasses the nozzle ring 38 and therefore the vanes 34 into contact with the side wall 31.

The nozzle ring 38 is mounted on a generally cylindrical tube member 42 with an annular bend therein: it is slidably engageable within the inner radial surface of the nozzle ring 38 to an extent limited by the shoulder 41. The lefthand end (in Figure 4) of the tube member 42 fits within the flange member 24 and has a tab 80 which is registerable within a slot 81 formed in the flange member 24; the righthand end has a tab 82 which is registerable within a slot 83 in the shoulder portion 41 of the nozzle ring 38 (see Figure 7). The tube member 42 performs several important functions in that it prevents the nozzle ring 38 from rotating, and it limits the axial travel of the nozzle ring 38. During use, the tube member 42 also defines the limit of radial travel of the nozzle ring 38 to maintain a clearance with the turbine housing arm thereby preventing binding of the nozzle ring 38 within the turbine housing. In addition, the tube member 42 acts as a seal against any exhaust gas which has leaked behind the nozzle ring 38 and into the cavity formed between the flange 24 and the turbine housing 18, thereby sealing the turbine housing 18 from the centre housing 26.

A bell crank system is used to rotate the unison ring 48 between its two extreme positions which correspond to the limits of variation of the geometry of the annular passage 30. A first link 54 has a pin rigidly connected at its inner end, with the righthand end (in Figure 4) of the pin 50 engaged within a radial slot 92 in the unison ring 48 in order to transmit any movement of the link 54 perpendicular to the plane of Figure 4 as rotation of the unison ring 48. The first link 54 is rigidly connected at its outer end to a pin 56 which projects through bushing 58 in a bore in the flange member 24 to a point outside the turbocharger hosing, where the end of the pin 56 is rigidly connected to a second link 60 which in turn is connected to a vacuum boost or other type of actuator 90, shown in Figure 1.

During operation, movement of the second link 60 is translated into movement of the first link 54 via pin 56, and into rotational movement of the unison ring 48. In turn vane arms 46 roll against the side walls of slots 51 to pivot the vanes 34 while the nozzle ring 38 remains stationary. Thus there is a change in the geometry of the plurality of passageways formed between adjacent vanes.

Thermal cycling can cause axial growth of the vanes, which if not spring loaded could become bound between the nozzle ring and the side wall 31 and thus prevented from rotation. The axial growth is accommodated through the use of the spring 40 which generally keeps the vane tips 35 in a sealed relationship with side wall 31. Any radial expansion of the nozzle ring is accommodated for in the design of the turbine housing, and in the tube 42.

Figure 7 shows two alternative forms of cylindrical passage spacers 86 and 88. Spacers 86 are located at the outer periphery of certain of the vanes 34 to limit the amount of adjustment of the vanes on either side, and thus of all the blades by virtue of the action of the unison ring. They are slightly longer than the axial length of the vanes, and are fitted within bores formed in the nozzle ring 38. Figure 7 also shows a spacer 88 for defining the minimum axial spacing between the nozzle ring 38 and the inner wall 31. In practice there would be at least three circumferentially spaced spacers 88, each of which could replace one vane 34. Either of these two spacers can have an extension of reduced diameter which projects into a bore formed within the side wall 31 to prevent rotation of the nozzle ring and avoid the need for tab 82 on the tube member 42. Furthermore, either of the two spacers can also have an extension 96 which projects through the nozzle ring into a slot 98 in the flange member, see Figure 8. A slot is necessary in order to accommodate any radial thermal growth of the nozzle ring during operation.

Various modifications to the depicted and described appparatus will be apparent to those skilled in the art. For example, it is possible that the flange member can be integral with the centre housing.

## Claims

1. A turbocharger (10) having a fixed casing (18, 24) including a turbine housing (18) for directing exhaust gas from an engine, through an annular passage (30) of the housing to the turbine rotor (12), a nozzle ring (38), coaxial with the rotor and having a face defining one of the two opposed walls of the passage, a plurality of nozzle vanes (34) in the annular passage and pivotally mounted on the nozzle ring, whereby pivoting of the vanes varies the effective area of the annular passage and/or the angle at which exhaust gas is directed to the turbine, and actuating means (46, 48) to pivot the vanes (34), the actuating means including a vane arm (46) coupled to each nozzle vane (34) and carried by the nozzle ring, and a unison ring (48) mounted to be rotatable in relation to the nozzle ring to pivot all the vanes in unison by engagement with the vane arms, the unison ring (48) being of annular form and arranged to be rotatable in relation to an annular recess (70) in a housing member (24) guided by rollers (49), characterised in that the nozzle ring is resiliently supported in the housing to allow it to float axially, and in that the rollers (49) roll on an inner wall (74) or an outer wall (76) of the recess according to the degree of radial expansion of the unison ring.

2. A turbocharger as claimed in Claim 1, characterised in that the nozzle ring is mounted for axial sliding, but not rotation, on mounting means (42).

3. A turbocharger as claimed in Claim 1 or Claim 2, characterised in that the nozzle ring is mounted by means of a coaxial support member (42) axially slidably engaging a bore of the nozzle ring and cantilevered from the fixed casing.

4. A turbocharger as claimed in Claim 3, characterised in that the coaxial support member has some radial resilience to allow thermal expansion of the nozzle ring (38).

5. A turbocharger as claimed in any preceding claim characterised in that the nozzle ring (38) is out of contact with the fixed casing.

6. A turbocharger as claimed in any preceding claim characterised in that the nozzle ring is spring loaded to tend to urge the vanes against a wall of the annular passage.

7. A turbocharger as claimed in Claim 6 characterised in that the nozzle ring is loaded by a coaxial disc spring (40).

8. A turbocharger as claimed in any preceding claim characterised in that at least one spacer (86) carried by the nozzle ring for limiting movement of the nozzle ring towards the opposed wall of the annular passage to a distance a little greater than the width of the vanes.

## Revendications

1. Turbosoufflante (10) comprenant un carter fixe (18,24) comportant un corps de turbine (18) pour diriger les gaz d'échappement d'un moteur vers le rotor de turbine (12) à travers un passage annulaire (30) du corps, un anneau de tuyères(38) coaxial au rotor et présentant une face qui définit une des deux parois opposées du passage, une pluralité d'aubages de tuyère (34) placés dans le passage annulaire et montés de façon pivotante sur l'anneau de tuyères, de sorte que le pivotement des aubages modifie la section effective du passage annulaire et/ou l'angle suivant lequel les gaz d'échappement sont dirigés vers la turbine, et des moyens de manoeuvre (46,48)pour faire pivoter les aubages (34), les moyens de manoeuvre comprenant un bras d'aubage (46) relié à chaque aubage de tuyère (34) et porté par l'anneau de tuyères, et une couronne de commande simultanée (48) montée de façon à pouvoir tourner par rapport à l'anneau de tuyères pour faire pivoter simultanément tous les aubages par attaque des bras d'aubage, la couronne de commande simultanée (48) étant de forme annulaire et disposée de façon à pouvoir tourner par rapport à un logement annulaire (70) dans un corps (24), guidée par des galets (49), caractérisée en ce que l'anneau de tuyères est supporté élastiquement dans le corps pour lui permettre de flotter axialement, et en ce que les galets (49) roulent sur une paroi intérieure (74) ou une paroi extérieure (76) du logement selon le degré de dilatation radiale de la couronne de commande simultanée.

2. Turbosoufflante suivant la revendication 1, caractérisée en ce que l'anneau de tuyères est monté pour un coulissement axial, mais sans rotation , sur des moyens de montage (42).

3. Turbosoufflante suivant la revendication 1 ou la revendication 2, caractérisée en ce que l'anneau de tuyères est monté au moyen d'une pièce support coaxiale (42) qui s'engage de façon axialement coulissante dans un alésage de l'anneau de tuyères et qui est tenue en porte-à-faux dans le corps fixe.

4. Turbosoufflante suivant la revendication 3, caractérisée en ce que la pièce support coaxiale possède une certaine élasticité radiale pour permettre la dilatation thermique de l'anneau de tuyères (38)

5. Turbosoufflante suivant l'une quelconque des revendications précédentes, caractérisée en ce que l'anneau de tuyères (38) n'est pas en contact avec le corps fixe.

6. Turbosoufflante suivant l'une quelconque des revendications précédentes, caractérisée en ce que l'anneau de tuyères est sollicité élastiquement de manière à tendre à pousser les aubages contre une paroi du passage annulaire.

7. Turbosoufflante suivant la revendication 6, caractérisée en ce que l' anneau de tuyères est sollicité par un ressort à disque coaxial (40).

8. Turbosoufflante suivant l' une quelconque des revendications précédentes, caractérisée en ce qu'au moins une entretoise (86) est portée par l'anneau de tuyères pour limiter le mouvement de l'anneau de tuyères vers la paroi opposée du passage annulaire à une distance un peu plus grande que la largeur des aubages.

**Patentansprüche**

1. Turbolader (10) mit einer festen Gehäuseanordnung(18, 24), mit einem Turbinengehäuse (18) zum Hindurchführen von Auspuffgas aus einem Triebwerk durch einen Ringkanal (30) des Turbinengehäuses zum Turbinenrotor (12), einem Düsenring (38), der koaxial zum Rotor angeordnet ist und eine Stirnfläche besitzt, die eine der beiden gegenüberliegenden Wände des Kanals bildet, einer Vielzahl von Düsenschaufeln (34) im Ringkanal, die verdrehbar am Düsenring befestigt sind, wobei ein Verdrehen der Schaufeln die effektive Fläche des Ringkanales und/oder des Winkels, mit dem Auspuffgas in die Turbine geführt wird, verändert, einer Betätigungsvorrichtung (46, 48) zum Verdrehen der Schaufeln (34), die einen mit jeder Düsenschaufel (34) gekoppelten und vom Düsenring aufgenommenen Schaufelarm, besitzt, und einem Gleichlaufring (48), der drehbar in bezug auf den Düsenring befestigt ist und alle Schaufeln gemeinsam durch Eingriff mit den Schaufelarmen verdrehen kann, der ringförmig ausgebildet ist und der in bezug auf eine ringförmige Aussparung (70) in einem durch Rollen (49) geführten Gehäusebauteil (24) drehbar angeordnet ist, **dadurch gekennzeichnet,** daß der Düsenring elastisch nachgiebig im Gehäuse angeordnet ist, damit er axial schweben kann, und daß die Rollen (49) auf einer Innenwand (74) oder einer Außenwand (76) der Aussparung entsprechend dem Ausmaß der radialen Expansion des Gleichlaufringes abrollen.

2. Turbolader nach Anspruch 1, dadurch gekennzeichnet, daß der Düsenring axial gleitend, jedoch nicht rotierend auf einer Befestigungsvorrichtung (42) befestigt ist.

3. Turbolader nach Anspruch 1 oder 2, dadurch gekennzeichnet, daß der Düsenring mit Hilfe eines koaxialen Abstützbauteiles (42) axial gleitend befestigt ist, mit einer Bohrung des Düsenringes in Eingriff kommt und an dem festen Gehäuse auslegerartig angeordnet ist.

4. Turbolader nach Anspruch 3, dadurch gekennzeichnet, daß das koaxiale Abstützbauteil eine radiale Nachgiebigkeit aufweist, um thermische Expansionen des Düsenringes (38) aufzunehmen.

5. Turbolader nach einem der vorausgehenden Ansprüche, dadurch gekennzeichnet, daß der Düsenring (38) außer Kontakt mit der festen Gehäuseanordnung steht.

6. Turbolader nach einem der vorausgehenden Ansprüche, dadurch gekennzeichnet, daß der Düsenring federvorgespannt ist, derart, daß die Schaufeln gegen eine Wand des Ringkanales gedrückt werden.

7. Turbolader nach Anspruch 6, dadurch gekennzeichnet, daß der Düsenring durch ein koaxiale Scheibenfeder (40) vorgespannt ist.

8. Turbolader nach einem der vorausgehenden Ansprüche, dadurch gekennzeichnet, daß mindestens ein Abstandshalter (86) von dem Düsenring aufgenommen wird, um die Bewegung des Düsenringes gegen die entgegengesetzte Wand des Ringkanales auf einen Abstand zu begrenzen, der geringfügig größer ist als die Breite der Schaufeln.

FIG. 1

FIG. 8

FIG. 4

FIG. 2

EP 0 160 460 B1

FIG. 3

FIG. 5

FIG. 7

FIG. 6